# EUROPÄISCHE PATENTSCHRIFT

(11) **EP 0 543 044 B1**
(45) Veröffentlichungstag und Bekanntmachung des Hinweises auf die Patenterteilung: **10.05.1995**
(21) Anmeldenummer: 91119838.0
(22) Anmeldetag: 21.11.1991
(51) Int. Cl.: B60R 22/44

(54) **Gurtaufroller mit Zugentlastung für Sicherheitsgurt-Rückhaltesysteme in Fahrzeugen**
Belt retractor with strain relief for safety belt restraint systems for vehicles
Rétracteur de sangle avec soulagement de traction pour systèmes de retenue par ceinture de sécurité pour véhicules

(43) Veröffentlichungstag der Anmeldung: 26.05.1993
(73) Patentinhaber: TRW Occupant Restraint Systems GmbH, 73553 Alfdorf (DE)
(72) Erfinder: Kopetzky, Robert, W-7075 Mutlangen (DE)
(74) Vertreter: Degwert, Hartmut, Dipl.-Phys.

(56) Entgegenhaltungen:
- EP-A- 0 315 900
- DE-C- 3 838 175
- FR-A- 2 532 181
- US-A- 4 303 208
- US-A- 4 993 657

## Beschreibung

Die Erfindung betrifft einen Gurtaufroller mit Zugentlastung für Sicherheitsgurt-Rückhaltesysteme in Fahrzeugen, mit einer zwischen dem Aufrollergehäuse und der das Gurtband aufnehmenden Gurtspule wirksamen Aufrollfeder, einem relativ zur Gurtspule drehbaren, selektiv sperrbaren Klinkenrad und einer Hilfsfeder, die mit ihrem ersten Ende an dem Klinkenrad angeschlossen ist und im gesperrten Zustand des Klinkenrades zwischen Gurtspule und Klinkenrad wirksam ist.

Ein Gurtaufroller dieser Art ist beispielsweise aus der DE-C-38 38 175 bekannt. Zur Verminderung der Gurtspannung zwecks Erhöhung des Tragekomforts wird bei diesem Gurtaufroller durch Sperrung des Klinkenrades von der Aufrollfeder auf die schwächer dimensionierte Hilfsfeder umgeschaltet, die im normalen Aufrollbetrieb funktionell in Reihe mit der Aufrollfeder liegt. Um die beim Umschalten zwischen normaler Aufrollkraft und verminderter Aufrollkraft auftretenden Stöße zu bedämpfen, wird eine Bremseinrichtung benötigt, die der Relativdrehung zwischen Klinkenrad und Gehäuse Reibung entgegensetzt.

Durch die Erfindung wird ein Gurtaufroller mit Zugentlastung zur Verfügung gestellt, der auch ohne Verwendung einer Bremseinrichtung ein stoßfreies Umschalten zwischen normaler und verminderter Aufrollkraft ermöglicht.

Bei dem erfindungsgemäßen Gurtaufroller, der im Patentanspruch 1 angegeben ist, wirkt die Aufrollfeder wie bei üblichen Gurtaufrollern ohne Zugentlastung direkt zwischen Gehäuse und Gurtspule. Die mit ihrem einen Ende an dem Klinkenrad angreifende Hilfsfeder ist mit ihrem anderen Ende über eine Freilaufkupplung an die Gurtspule angeschlossen. Die Freilaufkupplung läßt eine Relativdrehung zwischen dem an sie angeschlossenen Ende der Hilfsfeder und der Gurtspule nur in Abrollrichtung der Gurtspule zu. Bei gesperrtem Klinkenrad sind die Federkräfte von Aufrollfeder einerseits und Hilfsfeder andererseits einander entgegengesetzt, so daß die Kraft der Aufrollfeder um die der Hilfsfeder vermindert wird. Solange das Klinkenrad nicht gesperrt ist, hat die Hilfsfeder keine Wirkung. Bei Sperrung des Klinkenrades, beispielsweise mittels einer elektromagnetisch betätigten Klinke, die auf das Einstecken der Steckzunge in das Gurtschloß anspricht, wird die Hilfsfeder durch Gurtbandrücklauf gespannt, da die Freilaufkupplung in dieser Richtung keine Relativdrehung zwischen Gurtspule und dem an die Freilaufkupplung angeschlossenen Ende der Hilfsfeder zuläßt. Bei gespannter Hilfsfeder wirkt diese parallel zur Aufrollfeder auf die Gurtspule ein, jedoch in entgegengesetzter Richtung, so daS die Aufrollkraft und entsprechend die Zugspannung im Gurtsystem vermindert werden. Da die Hilfsfeder allmählich gespannt wird, erfolgt auch der Übergang auf die verminderte Gurtspannung stoß- und geräuschfrei. Zum Umschalten auf normale Gurtspannung wird das Klinkenrad entsperrt; durch die Spannung der Hilfsfeder wird nun das Klinkenrad beschleunigt und in Drehung versetzt, bis es durch Reibung nach erfolgter Entspannung der Hilfsfeder zum Stillstand kommt. Auch dieser Vorgang erfolgt stoßfrei und geräuscharm.

Es ist ersichtlich, daß der erfindungsgemäße Gurtaufroller mit Zugentlastung keine besonderen Einrichtungen zur Vermeidung von Stößen oder Geräuschen beim Umschalten zwischen normaler und verminderter Zugspannung benötigt. Er kann daher mit sehr geringem Aufwand verwirklicht werden.

Eine besonders kompakte Bauform ergibt sich, wenn gemäß einer bevorzugten Ausführungsform die Hilfsfeder axial neben der Aufrollfeder und radial innerhalb eines außenverzahnten Kranzes des Klinkenrades angeordnet ist und die Freilaufkupplung radial innerhalb der Hilfsfeder auf einer drehfest mit der Gurtspule verbundenen Welle sitzt, die einen seitlichen Mitnehmerfortsatz aufweist, an dem das radial innere Ende der Aufrollfeder angreift.

Weitere Merkmale und Vorteile der Erfindung ergeben sich aus der folgenden Beschreibung und aus der Zeichnung, auf die Bezug genommen wird. In der Zeichnung zeigen:
- Fig. 1a und 1b: ein Prinzipschema und ein Diagramm zur Erläuterung der Funktionsweise des Gurtaufrollers;
- Fig. 2: einen schematischen Axialschnitt einer Ausführungsform des Gurtaufrollers; und
- Fig. 3: eine schematische Explosionsansicht des Gurtaufrollers nach Fig. 2.

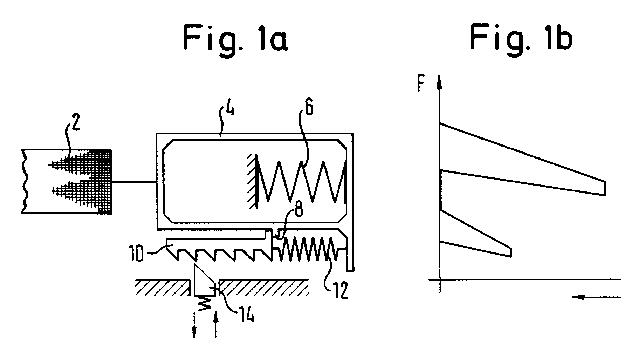

Um den prinzipiellen Aufbau und die Funktion des Gurtaufrollers anschaulich darzustellen, sind seine wesentlichen Funktionsteile in Fig. 1a so gezeichnet, als ob sie linear beweglich wären. Das Gurtband 2 ist an die Gurtspule 4 gekoppelt. Eine Aufrollfeder 6 ist zwischen Gurtspule 4 und dem Gehäuse wirksam. Die Gurtspule 4 trägt einen seitlich abstehenden Mitnehmer 8, an dem eine Anschlagfläche eines mit einer Rastverzahnung versehenen Schiebers 10 durch eine Zugfeder 12 in Anlage gehalten wird. Mit der Rastverzahnung des Schiebers 10 wirkt eine Rastklinke 14 zusammen, die quer zur Bewegungsrichtung des Schiebers 10 selektiv verschiebbar ist. Bei dem in Fig. 1a gezeigten Zustand hat die Zugfeder 12 keine Wirkung auf die Gurtspule 4; es ist nur die Aufrollfeder 6 wirksam, die als Druckfeder angenommen wird. Bei in die Rastverzahnung des Schiebers 10 eingerückter Rastklinke 14 wird dieser Schieber gehäusefest gehalten. Beim Aufrollen von Gurtband wird die Zugfeder 12 gespannt. Sie wirkt der Druckfeder 6 entgegen, so daß die resultierende Aufrollkraft vermindert wird. Wenn die Rastklinke 14 aus der Rastverzahnung des Schiebers 10 ausgerückt wird, entspannt sich die Zugfeder 12 und setzt den Schieber 10 in Bewegung, bis er durch Reibung zum Stillstand kommt.

Fig. 1b zeigt auf der Ordinate die wirksame Aufrollkraft und auf der Abszisse die Gurtband-Abzugslänge.

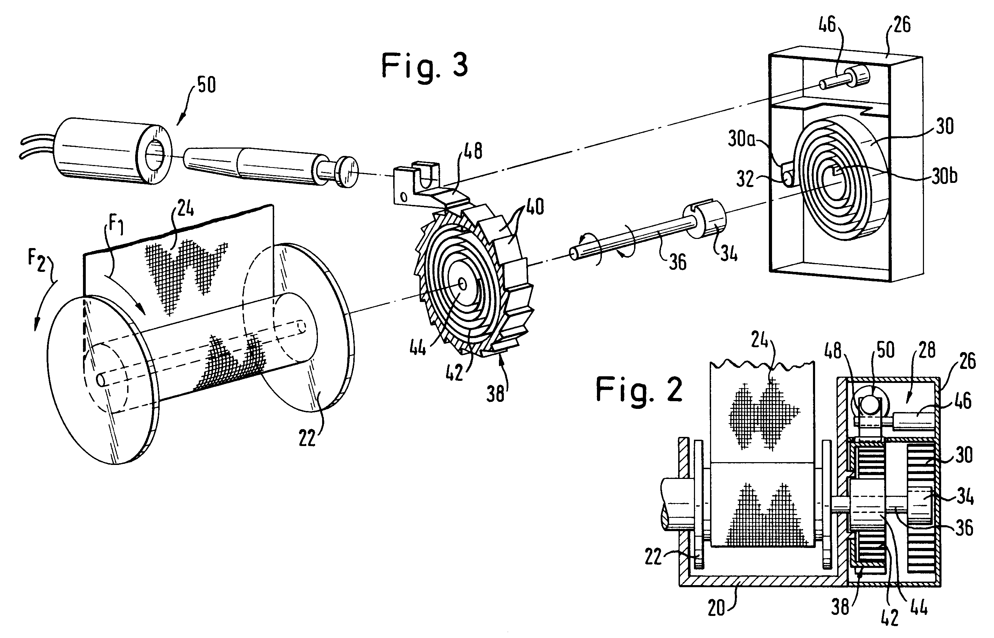

Die in den Fig. 2 und 3 schematisch gezeigte Ausführungsform eines Gurtaufrollers mit Zugentlastung weist in einem U-förmigen, lasttragenden Gehäuse 20 eine drehbar gelagerte Gurtspule 22 auf, auf der das Gurtband 24 aufgewickelt wird. Auf der in Fig. 2 links gezeigten Seite ist die Gurtspule 22 an einen nicht dargestellten, herkömmlichen fahrzeugsensitiven und/oder gurtbandsensitiven Sperrmechanismus angeschlossen. Auf der gegenüberliegenden Seite der Gurtspule ist im Inneren einer auf die benachbarte Seitenwand des Gehäuses 20 aufgesetzten Kappe 26 ein allgemein mit 28 bezeichneter Aufrollmechanismus angeordnet. Eine spiralförmige Aufrollfeder 30 ist mit ihrem äußeren Ende 30a an einem mit der Kappe 26 verbundenen Stift 32 eingehängt und greift mit ihrem inneren Ende 30b in einen Schlitz am Außenumfang eines zylindrischen Mitnehmerfortsatzes 34 am freien Ende einer Welle 36, die mit der Gurtspule 22 drehfest verbunden ist. Um diese Welle 36 drehbar gelagert ist ein Klinkenrad 38, das aus einer radialen Scheibe und einem außenverzahnten Zahnkranz 40 besteht, der vom Außenumfang der Scheibe axial senkrecht zur Seite der Aufrollfeder 30 hin absteht. Radial innerhalb des Zahnkranzes 40 ist eine spiralförmige Hilfsfeder 42 angeordnet. Die Hilfsfeder 42 ist mit ihrem äußeren Ende an den Zahnkranz 40 angeschlossen. Mit ihrem inneren Ende ist sie an den Außenring einer Freilaufkupplung 44 angeschlossen, deren Innenring drehfest auf der Welle 36 sitzt. Die Freilaufkupplung 44 läßt eine Relativdrehung zwischen der Welle 36 und dem an sie angeschlossenen Ende der Hilfsfeder 42 nur in Abrollrichtung der Gurtspule zu; in der entgegengesetzten Richtung stellt sie eine starre Verbindung zwischen Gurtspule 22 bzw. Welle 36 und dem inneren Ende der Hilfsfeder 42 her, so daß die von der Hilfsfeder 42 erzeugte Spannung auf die Gurtspule 22 einwirken kann. Mit der Rastverzahnung des Zahnkranzes 40 wirkt eine auf einem Stift 46 an der Kappe 26 schwenkbar gelagerte Rastklinke 48 zusammen, um das Klinkenrad 38 selektiv zu sperren. Die Rastklinke 48 wird durch einen Elektromagnet 50 betätigt, der beispielsweise durch einen Schaltkontakt im Gurtschloß des Sicherheitsgurtsystems ansteuerbar ist.

Die Aufrollfeder 30 ist wie bei einem herkömmlichen Gurtaufroller ohne Zugentlastung permanent zwischen der mit dem Gehäuse 20 verbundenen Kappe und der Gurtspule 22 wirksam. Solange die Rastklinke 48 aus der Verzahnung des Zahnkranzes 40 ausgerückt ist, bleibt das Klinkenrad 38 frei drehbar. Die Hilfsfeder 42 hat keinerlei Wirkung. Beim Anlegen des Gurtes wird zunächst Gurtband 24 von der Gurtspule 22 in Richtung des Pfeiles F₂ in Fig. 3 abgerollt. Durch Verriegeln der Steckzunge im Gurtschloß oder durch ein anderes Steuerkriterium wird der Elektromagnet 50 angesteuert, um die Rastklinke 48 mit der Rastverzahnung des Zahnkranzes 40 in Eingriff zu bringen und das Klinkenrad 38 gehäusefest zu sperren. Wird nun Gurtband wieder aufgerollt, so dreht sich die Gurtspule 22 in Richtung des Pfeiles F₁ in Fig. 3. Dies entspricht einer Relativdrehung zwischen Gurtspule und Hilfsfeder 42, bei welcher die Freilaufkupplung 44 einkuppelt, so daS die Hilfsfeder 42, deren äußeres Ende an dem drehfest gehaltenen Klinkenrad 38 angeschlossen ist und deren inneres Ende über die Freilaufkupplung 44 mitgenommen wird, durch die Drehung der Gurtspule 22 gespannt wird. Die im gespannten Zustand von der Hilfsfeder 42 erzeugte und über die Freilaufkupplung 44 auf die Gurtspule 22 übertragene Kraft wirkt der durch die Aufrollfeder 30 erzeugten Kraft entgegen, so daß die resultierende Aufrollkraft entsprechend vermindert ist. Da das Spannen der Hilfsfeder 42 allmählich erfolgt, treten weder Stoßeffekte noch störende Geräusche auf. Die Zugentlastung ist nun aktiv; durch die verminderte Gurtspannung wird der Tragekomfort erheblich gesteigert.

Zur Wiederherstellung der unverminderten Aufrollkraft, beispielsweise ausgelöst durch Öffnen des Gurtschlosses, wird die Rastklinke 48 ausgerückt; das nun frei drehbare Klinkenrad 38 wird durch die gespannte Hilfsfeder 42 beschleunigt, bis diese entspannt ist. Das Klinkenrad 38 kommt anschließend durch Reibung zur Ruhe. Da auch die Beschleunigung des Klinkenrades 38 durch die Hilfsfeder 42 kein abrupter Vorgang ist, wird sanft von der verminderten auf die unverminderte Aufrollkraft zurückgeschaltet. Es treten keinerlei störende Geräusche auf.

Bei dem beschriebenen Gurtaufroller wird die Zugentlastung mit wenigen kostengünstigen und leicht zu montierenden Bauteilen erreicht. Durch die Vermeidung einer Bremseinrichtung werden Reibungsverluste und Toleranzabhängigkeit vermieden. Vermieden werden auch Klinkengeräusche, wie sie bei anderen bekannten Mechanismen dadurch entstehen, daß beim Gurtbandauszug, der für die Aktivierung der Zugentlastung erforderlich ist, die federbelastete Rastklinke von der Rastverzahnung des mitgedrehten Klinkenrades an den Rampenflächen der Zähne abgewiesen wird und anschließend wieder zurückspringt.

## Patentansprüche

1. Gurtaufroller mit Zugentlastung für Sicherheitsgurt-Rückhaltesysteme in Fahrzeugen, mit einer zwischen dem Aufrollergehäuse (20) und der das Gurtband (24) aufnehmenden Gurtspule (22) wirksamen Aufrollfeder (30), einem relativ zur Gurtspule (22) drehbaren, selektiv sperrbaren Klinkenrad (38) und einer Hilfsfeder (42), die mit ihrem ersten Ende an dem Klinkenrad (38) angeschlossen ist und im gesperrten Zustand des Klinkenrades (38) zwischen Gurtspule (22) und Klinkenrad (38) wirksam ist, dadurch gekennzeichnet, daß die Hilfsfeder (42) mit ihrem zweiten Ende an die Gurtspule (22) über eine Freilaufkupplung (44) angeschlossen ist, die eine Relativdrehung zwischen diesem Ende der Hilfsfeder (42) und der Gurtspule (22) nur in der Abrollrichtung der Gurtspule (22) zuläßt, und daß die Federkräfte von Aufrollfeder (30) einerseits und Hilfsfeder (42) andererseits bei gesperrtem Klinkenrad (38) einander entgegengesetzt wirken.

2. Gurtaufroller nach Anspruch 1, dadurch gekennzeichnet, daß die Hilfsfeder (42) axial neben der Aufrollerfeder (30) angeordnet ist.

3. Gurtaufroller nach Anspruch 1 oder 2, dadurch gekennzeichnet, daß die Hilfsfeder (42) radial innerhalb eines außenverzahnten Zahnkranzes (40) des Klinkenrades (38) angeordnet ist.

4. Gurtaufroller nach Anspruch 3, dadurch gekennzeichnet, daß die Freilaufkupplung (44) radial innerhalb der Hilfsfeder (42) angeordnet ist und auf einer drehfest mit der Gurtspule (22) verbundenen Welle (36) sitzt, die einen seitlichen Mitnehmerfortsatz (34) aufweist, an dem das radial innere Ende (30b) der Aufrollfeder (30) angreift.

## Claims

1. Belt retractor with tension relief for safety belt restraining systems in vehicles, comprising a retracting spring (30) effective between the retractor housing (20) and the belt spool (22) receiving the webbing (24), a selectively lockable ratchet wheel (38) rotatable relatively to the belt spool (22) and an auxiliary spring (42) which with its first end is connected to the ratchet wheel (38) and in the locked state of the ratchet wheel (38) is effective between the belt spool (22) and ratchet wheel (38), characterized in that the auxiliary spring (42) is connected with its second end to the belt spool (22) via an overrunning clutch (44) which permits a relative rotation between said end of the auxiliary spring (42) and the belt spool (22) only in the unwinding direction of the belt spool (22) and that when the ratchet wheel (38) is locked the spring forces of the retracting spring (30) on the one hand and the auxiliary spring (42) on the other hand act against each other.

2. Belt retractor according to claim 1, characterized in that the auxiliary spring (42) is arranged axially adjacent the retracting spring (30).

3. Belt retractor according to claim 1 or 2, characterized in that the auxiliary spring (42) is arranged radially within an externally toothed gear rim (40) of the ratchet wheel (38).

4. Belt retractor according to claim 3, characterized in that the overrunning clutch (44) is arranged radially within the auxiliary spring (42) and is mounted on a shaft (36) which is non-rotatably connected to the belt spool (22) and which has a lateral driver extension (34) on which the radially inner end (30b) of the retracting spring (30) engages.

## Revendications

1. Enrouleur de ceinture à relâchement de la traction pour systèmes de retenue de ceinture de sécurité dans des véhicules, comprenant un ressort d'enroulement (30) agissant entre le boîtier (20) de l'enrouleur et la bobine (22) recevant la sangle (24) de la ceinture, une roue à rochet (38) rotative par rapport à la bobine (22) de la ceinture et blocable sélectivement, ainsi qu'un ressort auxiliaire (42), dont une première extrémité est raccordée à la roue à rochet (38) et qui, lorsque la roue à rochet (38) est à l'état de blocage, est actif entre la bobine (22) de la ceinture et la roue à rochet (38), caractérisé en ce que la seconde extrémité du ressort auxiliaire (42) est raccordée à la bobine (22) de la ceinture par l'entremise d'un accouplement à roue libre (44) qui n'autorise une rotation relative entre cette extrémité du ressort auxiliaire (42) et la bobine (22) de la ceinture que dans le sens de déroulement de la bobine (22) de la ceinture, et en ce que les forces d'élasticité du ressort d'enroulement (30), d'une part, et du ressort auxiliaire (42), d'autre part, agissent en sens opposés lorsque la roue à rochet (38) est bloquée.

2. Enrouleur de ceinture selon la revendication 1, caractérisé en ce que le ressort auxiliaire (42) est disposé axialement à côté du ressort d'enroulement (30).

3. Enrouleur de ceinture selon la revendication 1 ou 2, caractérisé en ce que le ressort auxiliaire (42) est disposé radialement à l'intérieur d'une couronne (40) à denture extérieure de la roue à rochet (38).

4. Enrouleur de ceinture selon la revendication 3, caractérisé en ce que l'accouplement à roue libre (44) est disposé radialement à l'intérieur du ressort auxiliaire (42) et est calé sur un arbre (36) qui est solidarisé en rotation avec la bobine (22) de la ceinture et qui comporte un prolongement latéral d'entraînement (34) qu'attaque l'extrémité radialement intérieure (30b) du ressort d'enroulement (30).
